(19) Europäisches Patentamt
European Patent Office
Office européen des brevets

(11) EP 4 174 042 A1

(12) **EUROPEAN PATENT APPLICATION**
published in accordance with Art. 153(4) EPC

(43) Date of publication:
**03.05.2023 Bulletin 2023/18**

(21) Application number: **21832571.0**

(22) Date of filing: **28.06.2021**

(51) International Patent Classification (IPC):
***C04B 12/04*** *(2006.01)* ***C04B 16/06*** *(2006.01)*
***C04B 22/14*** *(2006.01)* ***C04B 28/26*** *(2006.01)*

(52) Cooperative Patent Classification (CPC):
**C04B 12/04; C04B 16/06; C04B 22/14; C04B 28/26;** Y02W 30/91

(86) International application number:
**PCT/JP2021/024324**

(87) International publication number:
**WO 2022/004643 (06.01.2022 Gazette 2022/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.06.2020 JP 2020111480**

(71) Applicant: **Kuraray Co., Ltd.**
**Kurashiki-shi, Okayama 710-0801 (JP)**

(72) Inventors:
- **HORIKOSHI, Takafumi**
  **Okayama-shi, Okayama 702-8601 (JP)**
- **IMAGAWA, Akira**
  **Okayama-shi, Okayama 702-8601 (JP)**
- **IWASAKI, Yoshihiro**
  **Osaka-shi, Osaka 530-8611 (JP)**
- **SUEMORI, Hisashi**
  **Kurashiki-shi, Okayama 713-8550 (JP)**
- **OGAWA, Atsuhisa**
  **Okayama-shi, Okayama 702-8601 (JP)**
- **HIGASHIMOTO, Yoshihiro**
  **Yamatokoriyama-shi, Nara 639-1133 (JP)**

(74) Representative: **Müller-Boré & Partner Patentanwälte PartG mbB**
**Friedenheimer Brücke 21**
**80639 München (DE)**

(54) **CURED BODY REINFORCED WITH FIBERS**

(57) The present invention relates to a cured composite comprising (A) an aluminosilicate source, (B) an alkali activator and (C) alkali-resistant fibers, in which: the aluminosilicate source (A) contains a blast furnace slag, in which the content of the blast furnace slag is 40% by mass or more relative to a total solid content in the aluminosilicate source (A); the content of the alkali activator (B) is 10% by mass or less relative to a total solid content in the curable composition; and the water content in the cured composite is 10.0% by mass or less relative to a total mass of the cured composite.

EP 4 174 042 A1

## Description

TECHNICAL FIELD

The present invention relates to a cured fiber reinforced composite.

BACKGROUND ART

Heretofore, cementitious materials have been used in wide varieties of fields, particularly civil engineering and architectural fields due to their versatility in production. However, huge energy is required for the production of cement, and the discharge of a large amount of carbon dioxide associated with the huge energy has been seen as a problem. In recent years, a technology "geopolymer" has been studied. A geopolymer is an inorganic polymer produced by reacting an aluminosilicate with an alkali metal silicate, has superior durability, acid resistance and the like compared with cementitious materials, and discharges carbon dioxide in a significantly small amount during a period from the production of raw materials for the geopolymer and the production of the geopolymer. Therefore, a geopolymer has been focused as an environment-friendly material.

For example, Patent Document 1 discloses a curable composition prepared by adding specific slag particles to a curable composition comprising aluminum silicate, an alkali metal silicate, reinforcing fibers and water for the purpose of improving the toughness of a cured composite produced from the curable composition without deteriorating the fluidability of the curable composition.

Patent Document 2 discloses a high-strength composite material which is produced by kneading and forming a composition consisting of a granulated blast furnace slag, an alkali activator, a water-soluble polymer, an ultra-fine powdery substance, organic short fibers and water, and then curing the formed product in a wet mode. It is disclosed that the composite material has excellent resistance against flame.

Patent Document 3 discloses a geopolymer composition which consists of an active filler comprising at least one selected from fly ash, blast furnace slag, sewage incineration sludge and kaolin, silica or a silica compound, and an alkaline solution, and is characterized in that the molar ratio of the amount of silica to the amount of alkali in the solution is 0.50 or less. It is disclosed that this geopolymer composition has improved durability.

As mentioned above, a geopolymer has the advantage of being environment-friendly. Meanwhile, a geopolymer has very high brittleness. Improvement proposals for reinforcing a geopolymer with fibers are known, as disclosed in Patent Documents 1 and 2. However, a curable composition of a geopolymer has a very high viscosity and a short working life. Therefore, it is difficult to mix fibers homogeneously in the composition and, as a result, the reinforcing effect of the fibers cannot be developed satisfactorily. Furthermore, when fibers are not mixed homogeneously, fiber masses are formed and, as a result, the deterioration in dimensional stability becomes of concern. With respect to a conventional geopolymer, a large amount of an alkali activator is used for the reaction of an aluminosilicate. Therefore, the dimensional stability of the produced cured composite is not so high. Even when the alkali activator is used in the amount disclosed in Patent Document 3, an alkaline component is dissolved in the water upon the immersion of the cured composite in the water and, as a result, the deterioration in dimensional stability becomes of concern. Because of these facts, it has been difficult to produce a cured composite having both of high bending strength and high dimensional stability.

PRIOR ART DOCUMENT

PATENT DOCUMENTS

Patent Document 1: JP-A-2011-184221

Patent Document 2: JP-A-5-097495

Patent Document 3: JP-A-2015-157731

SUMMARY OF THE INVENTION

PROBLEMS TO BE SOLVED BY THE INVENTION

In these situations, the present invention addresses the problem of providing a cured composite reinforced with fibers and having high bending strength and high dimensional stability.

SOLUTIONS TO THE PROBLEMS

The present inventors have made intensive and extensive studies for the purpose of solving the problem. As a result, the present invention is accomplished. The present invention includes the following preferred aspects.

[1] A cured composite of a curable composition comprising (A) an aluminosilicate source, (B) an alkali activator and (C) alkali-resistant fibers, in which:

the aluminosilicate source (A) contains a blast furnace slag, in which the content of the blast furnace slag is 40% by mass or more relative to a total solid content in the aluminosilicate source (A);
the content of the alkali activator (B) is 10% by mass or less relative to a total solid content in the curable composition; and
the water content in the cured composite is 10.0% by mass or less relative to a total mass of the cured composite.

[2] The cured composite according to [1], wherein the content of the aluminosilicate source (A) is 20% by mass or more and 75% by mass or less relative to a total solid content in the curable composition.
[3] The cured composite according to [1] or [2], wherein the alkali-resistant fibers (C) comprise at least one selected from the group consisting of polyvinyl alcohol-based fibers, polyethylene fibers, polypropylene fibers, acrylic fibers, aramid fibers and nylon fibers.
[4] The cured composite according to any one of [1] to [3], wherein the content of the alkali-resistant fibers (C) is 0.05% by mass or more and 5% by mass or less relative to a total solid content in the cured composite.
[5] The cured composite according to any one of [1] to [4], wherein a fiber agglomeration degree of the alkali-resistant fibers (C) is 10% or less.
[6] The cured composite according to any one of [1] to [5], wherein a coefficient of variation of an average content of the alkali-resistant fibers (C) contained in arbitrary 10 pieces cut out from the whole or part of the composite so that each piece weighs 10 g is 30% or less.
[7] The cured composite according to any one of [1] to [6], wherein the cured composite further contains an aggregate (E), in which the content of the aggregate (E) is 15% by mass or more and 75% by mass or less relative to a total solid content in the cured composite.
[8] The cured composite according to any one of [1] to [7], wherein the aluminosilicate source (A) further contains at least one selected from the group consisting of fly ash, metakaolin and red mud.
[9] The cured composite according to any one of [1] to [8], wherein the cured composite further contains a slag activator (D), in which the content of the slag activator (D) is 0.01% by mass or more and 3% by mass or less relative to a total solid content in the cured composite.
[10] The cured composite according to any one of [1] to [9], wherein the cured composite further contains a calcium sulfate derivative, in which the content of the calcium sulfate derivative is 0.01% by mass or more and 20% by mass or less relative to a total solid content in the cured composite.

EFFECTS OF THE INVENTION

According to the present invention, a cured composite reinforced with fibers and having high bending strength and high dimensional stability can be provided.

EMBODIMENTS OF THE INVENTION

The cured composite according to the present invention is a cured composite of a curable composition comprising (A) an aluminosilicate source, (B) an alkali activator and (C) alkali-resistant fibers. The aluminosilicate source (A) contains a blast furnace slag, in which the content of the blast furnace slag is 40% by mass or more relative to a total solid content in the aluminosilicate source (A), the content of the alkali activator (B) is 10% by mass or less relative to a total solid content in the curable composition, and the water content in the cured composite is 10.0% by mass or less relative to a total mass of the cured composite.
If the water content in the cured composite is more than 10.0% by mass relative to a total mass of the cured composite, it is difficult for the cured composite to have high bending strength and high flexural toughness.
The present inventors have found that, when a cured composite of a curable composition comprising a specific aluminosilicate source (A), an alkali activator (B) at a specified content ratio, and alkali-resistant fibers (C) has a water content of 10.0% by mass or less relative to a total mass of the cured composite, the cured composite can have both of high bending strength and high dimensional stability. The water content in the cured composite can be adjusted to a value falling within the range of 10.0% by mass or less by, for example, drying a cured and undried composite obtained after curing by the below-mentioned method. In general, when a cured and undried composite is dried, particularly in the case where the cured and undried composite is dried at a relatively high temperature (e.g., a temperature higher than 100°C), cracking occurs in the surface and the inside of the cured and undried composite, resulting in the deterioration in the mechanical strength of the cured composite. Particularly in a cured and undried composite that is not reinforced with fibers, many cracks are formed and, as a result, the mechanical strength of the cured composite is significantly deteriorated. However, in the present invention, it is considered that the above-mentioned deterioration in mechanical strength can be avoided and improved mechanical strength can be achieved, because the cured composite is formed from a curable composition having a specified chemical composition. That is, it is considered as follows: the curing reaction can be allowed to proceed substantially completely and the denseness between the fibers and the polymer matrix can be further increased by drying (preferably drying at a relatively high temperature), whereby the reinforcing effect of the fibers can be enhanced; as a result, high bending strength and high flexural toughness of the cured composite can be achieved. However, the above-mentioned mechanisms are all supposition, and the present invention is not limited to those.

The water content in the cured composite is preferably 9.0% by mass or less, more preferably 8.0% by mass or less, still more preferably 5.0% by mass or less, particularly preferably 3.0% by mass or less, relative to a total mass of the cured composite. When the water content in the cured composite is equal to or less than the above-mentioned upper limit, a cured composite having higher bending strength and higher flexural toughness can be produced. The water content in the cured composite can be adjusted to a value that is equal to or less than the above-mentioned upper limit by, for example, drying a cured and undried composite obtained after curing by the below-mentioned method. The lower limit of the water content in the cured composite is not particularly limited. The water content in the cured composite may be 0% by mass. The water content in the cured composite can be measured by the method mentioned in the section "Examples" below.

<(A) Aluminosilicate source>

The aluminosilicate source (A) contains an aluminosilicate ($xM_2O•yAl_2O_3•zSiO_2•nH_2O$, wherein M represents an alkali metal) as a main component. The term "main component" as used herein refers to a component contained in a largest mass in the aluminosilicate source. The aluminosilicate source elutes cations such as aluminum ions and silicon ions upon the contact with a highly alkaline solution [an aqueous solution of an alkali activator (B)], and the aluminosilicate source is polycondensed to form a strong $SiO_4•AlO_4$ polymer network (geopolymer).

The aluminosilicate source (A) contains a blast furnace slag, in which the content of the blast furnace slag is 40% by mass or more relative to a total solid content in the aluminosilicate source (A). If the content of the blast furnace slag is less than 40% by mass, it is difficult for the cured composite to have high bending strength, high flexural toughness and high dimensional stability. The content of the blast furnace slag is preferably 50% by mass or more, more preferably 60% by mass or more, still more preferably 65% by mass or more, particularly preferably 70% by mass or more, relative to a total solid content in the aluminosilicate source (A), and may be 100% by mass relative to a total solid content in the aluminosilicate source (A). When the content of the blast furnace slag is equal to or more than the above-mentioned lower limit, the produced cured composite can have a denser structure, and therefore a cured composite having higher bending strength, higher flexural toughness and higher dimensional stability can be produced. A blast furnace slag is a more inexpensive raw material compared with metakaolin and the like, and therefore the use of a blast furnace slag is advantageous with respect to production cost.

The types of the blast furnace slag include an air-cooled slag that has a crystalline form and a granulated slag that has an amorphous form, and either one of these slags can be used in the present invention. From the viewpoint that further improvement in strength and further promotion of curing can be imparted to the cured composite, a granulated slag is preferably used.

Preferred examples of the aluminosilicate source (A) other than the blast furnace slag include: an industrial waste material such as fly ash, red mud and sewage sludge burned ash; naturally occurring aluminosilicate minerals and calcined products thereof (e.g., metakaolin); and volcanic ash. These substances are commercially available. In the present invention, these substances may be used singly, or two or more of them may be used in combination.

In one aspect of the present invention, in addition to the blast furnace slag, the aluminosilicate source (A) further contains at least one selected from the group consisting of fly ash, metakaolin and red mud. In this aspect, the denseness of the cured composite can be further increased compared with the case where the blast furnace slag is used alone as the aluminosilicate source (A), and therefore a cured composite having higher bending strength, higher flexural toughness and higher dimensional stability can be produced. In this aspect, the content of the at least one selected from the group consisting of fly ash, metakaolin and red mud is preferably 5% by mass or more, more preferably 10% by mass or more, still more preferably 15% by mass or more, and is preferably 60% by mass or less, more preferably 50% by mass or less, still more preferably 40% by mass or less, relative to a total solid content in the aluminosilicate source (A). The content of the blast furnace slag is 40% by mass or more, preferably 50% by mass or more, more preferably 60% by mass or more, and is preferably 95% by mass or less, more preferably 90% by mass or less, still more preferably 85% by mass or less, relative to a total solid content in the aluminosilicate source (A).

The specific surface area of the blast furnace slag is preferably 1000 to 9000 $cm^2/g$, more preferably 2000 to 8000 $cm^2/g$ or more, still more preferably 3000 to 7000 $cm^2/g$. When the specific surface area of the blast furnace slag is equal to or more than the above-mentioned lower limit and is equal to or less than the above-mentioned upper limit, the blast furnace slag can have sufficient reaction sites and a suitable average particle diameter. As a result, higher bending strength, higher flexural toughness and higher dimensional stability can be achieved in the produced cured composite. The specific surface area of the blast furnace slag can be adjusted to a value that is equal to or more than the above-mentioned lower limit and equal to or less than the above-mentioned upper limit by, for example, pulverizing the blast furnace slag, then classifying the pulverized product, and using a specific fraction among the classified fractions. The specific surface area of the blast furnace slag can be measured by, for example, a laser diffraction/scattering method.

The content of the aluminosilicate source (A) is preferably 20% by mass or more, more preferably 30% by mass or more, still more preferably 35% by mass or more, particularly preferably 40% by mass or more, and is preferably 75% by mass or less, more preferably 70% by mass or less, still more preferably 65% by mass or less, particularly preferably 60% by mass or less, relative to a total solid content in the curable composition. The cured composite in the present invention is generally produced by a method including a step for forming the curable composition. When the cured composite is produced by a casting method or an extrusion method, the content of the aluminosilicate source (A) is preferably 25% by mass or more, more preferably 35% by mass or more, still more preferably 40% by mass or more, and is preferably 70% by mass or less, more preferably 65% by mass or less, still more preferably 60% by mass or less, relative to a total solid content in the curable composition. When the content of the aluminosilicate source (A) is equal to or more than the above-mentioned lower limit and is equal to or less than the above-mentioned upper limit, a cured composite having higher bending strength, higher flexural toughness and higher dimensional stability can be produced.

<(B) Alkali activator>

The alkali activator (B) to be used in the present invention shows high alkalescency in water, and has an activity to activate the aluminosilicate source (A) and elute cations such as Al ions and Si ions upon the contact with the aluminosilicate source (A).

The content of the alkali activator (B) is 10% by mass or less relative to a total solid content in the curable composition. If the content of the alkali activator (B) is more than 10% by mass, it is difficult to achieve the high dimensional stability in the cured composite.

Examples of the alkali activator (B) include: an alkali metal hydroxide such as sodium hydroxide, potassium hydroxide and lithium hydroxide; and an alkali metal carbonate such as sodium carbonate, potassium carbonate and lithium carbonate. These substances may be used singly, or two or more of them may be used in combination.

When the curable composition in the present invention contains the alkali activators (B) as exemplified herein, the content is preferably 0.01% by mass or more, more preferably 0.1% by mass or more, still more preferably 1% by mass or more, and is 10% by mass or less, preferably 9% by mass or less, more preferably 8% by mass or less, still more preferably 7% by mass or less, particularly preferably 6% by mass or less, relative to a total solid content in the curable composition. When the content is equal to or more than the above-mentioned lower limit and is equal to or less than the above-mentioned upper limit, the activation of the aluminosilicate source (A) can proceed smoothly and, as a result, higher bending strength, higher flexural toughness and higher dimensional stability can be achieved in the produced cured composite.

Another example of the alkali activator (B) is an alkali metal silicate. The alkali metal silicate has an activity to activate the aluminosilicate source (A) upon the contact with the aluminosilicate source (A), and can become a supply source for a silicic acid monomer [$Si(OH)_4$] that can form a geopolymer.

Preferred examples of the alkali metal silicate include sodium silicate, potassium silicate and lithium silicate. In the present invention, these substances may be used singly, or two or more of them may be used in combination. From the viewpoint of inexpensiveness, sodium silicate is preferably used. As long as the advantage of production cost cannot be deteriorated, a portion of sodium silicate may be replaced by potassium silicate. Sodium silicate may be used in the form of water glass (a concentrated aqueous solution of sodium silicate) produced by dissolving sodium silicate in water and then heating the resultant solution.

The alkali metal silicate is generally used in the form of an aqueous solution. The (alkali metal)/water molar ratio in the alkali metal silicate aqueous solution is preferably 0.02 or more. The strength of the cured composite is increased with the increase in the molar ratio. Therefore, the molar ratio is preferably a larger value. However, the fluidability of the curable composition comprising the aluminosilicate source (A), the alkali activator (B) and the alkali-resistant fibers (C) is reduced and the forming of the cured composite becomes more difficult with the decrease in the amount of water. Therefore, the molar ratio is preferably 0.03 to 0.20, more preferably 0.04 to 0.15, particularly preferably 0.06 to 0.12.

When the curable composition in the present invention contains an alkali metal silicate as the alkali activator (B), the content of the alkali metal silicate is preferably 0.01% by mass or more, more preferably 0.1% by mass or more, still more preferably 1% by mass or more, and is 10% by mass or less, preferably 8% by mass or less, more preferably 7% by mass or less, still more preferably 6% by mass or less, particularly preferably 5% by mass or less, relative to a total solid content in the curable composition. When the content is equal to or more than the above-mentioned lower limit and is equal to or less than the above-mentioned upper limit, higher bending strength, higher flexural toughness and higher dimensional stability can be achieved in the produced cured composite.

The curable composition in the present invention may contain, as the alkali activator (B), a combination of the alkali metal hydroxide and/or the alkali metal carbonate and the alkali metal silicate, preferably a combination of the alkali metal hydroxide and the alkali metal silicate. When the curable composition in the present invention contains the above-mentioned combination as the alkali activator (B), a cured composite having higher bending strength, higher flexural toughness and high dimensional stability can be produced.

When the curable composition in the present invention contains the above-mentioned combination as the alkali activator (B), the content is preferably 0.6% by mass or more, more preferably 1.5% by mass or more, still more preferably 3% by mass or more, and is 10% by mass or less, preferably 9% by mass or less, more preferably 8% by mass or less, still more preferably 7% by mass or less, particularly preferably 6% by mass or less, relative to a total solid content in the curable composition. When the content is equal to or more than the above-mentioned lower limit and is equal to or less than the above-mentioned upper limit, higher bending strength, higher flexural toughness and higher dimensional stability can be achieved in the produced cured composite.

<(C) Alkali-resistant fibers>

The alkali-resistant fibers (C) to be used in the present invention have an effect to improve the bending strength and flexural toughness of the cured composite. In addition, the alkali-resistant fibers (C) can prevent the occurrence of cracking that may occur during the process for curing and drying the curable composition and thereby can prevent the deterioration in the bending strength and dimensional stability of the cured composite.

The alkali-resistant fibers (C) may be either one of inorganic fibers or organic fibers, as long as the alkali-resistant fibers (C) can have chemical durability against alkalis. Examples of the alkali-resistant inorganic fibers include alkali-resistant glass fibers, steel fibers, stainless fibers, and carbon fibers. Examples of the alkali-resistant organic fibers include various alkali-resistant fibers, such as polyvinyl alcohol (also simply referred to as "PVA", hereinafter)-based fibers, polyolefin-based fibers (e.g., polyethylene fibers, polypropylene fibers), ultra-high-molecular-weight polyethylene fibers, polyamide-based fibers (e.g., polyamide 6, polyamide 6,6, polyamide 6,10), aramid fibers (particularly paraaramid fibers), poly-p-phenylenebenzobisoxazole-based fibers [e.g., poly-p-phenylenebenzoxazole (PBO) fibers], nylon fibers, acrylic fibers, rayon-based fibers (e.g., polynosic fibers, solvent-spinning cellulose fibers), polyphenylene sulfide fibers (PPS fibers), and polyether ether ketone fibers (e.g., PEEK fibers). These types of alkali-resistant fibers may be used singly, or two or more of them may be used in combination.

Among these fibers, polyvinyl alcohol-based fibers, polyethylene fibers, polypropylene fibers, acrylic fibers, aramid fibers and nylon fibers are preferably used from the viewpoint that more superior reinforcing properties can be imparted to the cured composite and these fibers can be produced at low cost. In one aspect of the present invention, the alkali-resistant fibers (C) are preferably at least one type of fibers selected from the group consisting of polyvinyl alcohol-based fibers, polyethylene fibers, polypropylene fibers, acrylic fibers, aramid fibers and nylon fibers.

The average fiber diameter of the alkali-resistant fibers (C) is preferably 1000 μm or less, more preferably 500 μm or less, still more preferably 250 μm or less, furthermore preferably 150 μm or less, particularly preferably 75 μm or less. The average fiber diameter of the alkali-resistant fibers (C) is generally 3 μm or more, preferably 5 μm or more, more preferably 7 μm or more. When the average fiber diameter of the alkali-resistant fibers (C) is equal to or less than the above-mentioned upper limit, the alkali-resistant fibers (C) also have sufficient fiber strength and can be produced on an industrial scale stably. When the average fiber diameter of the alkali-resistant fibers (C) is equal to or more than the above-mentioned lower limit, the fibers can be dispersed more uniformly in a polymer matrix. The term "polymer matrix" as used herein (also simply referred to as "matrix", hereinafter) refers to a polymer part that binds the alkali-resistant fibers (C) to each other in the cured composite.

From the viewpoint that both of satisfactory dispersibility of the fibers in the curable composition and satisfactory reinforcing properties after the curing of the curable composition can be achieved, the aspect ratio of the alkali-resistant fibers (C) is preferably 15 or more, more preferably 30 or more, still more preferably 40 or more, particularly preferably 50 or more, and is preferably 2500 or less, more preferably 2000 or less, still more preferably 1000 or less, particularly preferably 500 or less. The term "aspect ratio" as used herein refers to a ratio (L/D) of a fiber length L to a fiber diameter D.

The average fiber diameter and the aspect ratio of the alkali-resistant fibers (C) can be determined in accordance with JIS L 1015 "Chemical fiber staple test method (8.5.1)".

The average fiber length of the alkali-resistant fibers (C) is preferably 0.5 to 40 mm, more preferably 1 to 15 mm from the viewpoint that both of satisfactory dispersibility of the fibers in the curable composition and satisfactory reinforcing properties after the curing of the curable composition can be achieved.

The fiber tensile strength of the alkali-resistant fibers (C) in the present invention is preferably 3 cN/dtex or more, more preferably 5 cN/dtex or more, particularly preferably 7 cN/dtex or more. When the fiber tensile strength of the alkali-resistant fibers (C) is equal to or more than the above-mentioned lower limit, the reinforcing performance for the cured composite can be further improved. The upper limit of the fiber tensile strength of the alkali-resistant fibers (C) in the present invention may be set appropriately depending on the types of the fibers, and is, for example, 30 cN/dtex or less. The fiber tensile strength can be determined in accordance with JIS L 1015 "Chemical fiber staple test method (8.5.1)".

When PVA-based fibers, e.g., vinylon fibers, are used as the alkali-resistant fibers (C), PVA-based fibers having the following properties may be used. The polymerization degree of a PVA-based polymer constituting the PVA-based fibers may be selected appropriately depending on the intended use, and is not particularly limited. With taking the mechanical properties and the like of the produced fibers into consideration, the average polymerization degree of the PVA-based polymer determined from the viscosity of an aqueous solution at 30°C is preferably about 500 to 20000, more preferably about 800 to 15000, particularly preferably about 1000 to 10000. From the viewpoint of the strength of the produced fibers, the average polymerization degree of the PVA-based polymer is preferably 1000 or more, more preferably 1200 or more, more preferably 1500 or more, particularly preferably 1750 or more. The PVA-based polymer may be a medium-polymerization-degree product having an average polymerization degree of 1000 or more and less than 3000, or may be a high-polymerization-degree product having an average polymerization degree of 3000 or more.

The saponification degree of the PVA-based polymer may also be selected appropriately depending on the intended use, and is not particularly limited. From the viewpoint of the dynamic properties of the produced fibers, the saponification degree of the PVA-based polymer may be for example 95 mol% or more, preferably 98 mol% or more. The saponification degree of the PVA-based polymer may be 99 mol% or more, and may be 99.8 mol% or more. When the saponification degree of the PVA-based polymer is equal to or more than the above-mentioned lower limit, satisfactory mechanical properties, satisfactory process passing properties, satisfactory cost for the production and the like of the produced fibers can be achieved.

The PVA-based fibers to be used in the present invention can be produced by dissolving the PVA-based polymer in a solvent, spinning the resultant solution by any one of a wet process, a dry-wet process or a dry process, and subjecting the spun product to dry heat stretching. The wet spinning is a method for ejecting a spinning stock solution into a curing bath through a spinning nozzle directly. The dry-wet spinning is a method for ejecting a spinning stock solution into air or an inert gas located apart by an arbitrary distance temporality through a spinning nozzle and subsequently introducing the spinning stock solution into a curing bath. The dry spinning is a method for ejecting a spinning stock solution into air or an inert gas. After the spinning, the PVA-based fibers may be subjected to a stretching treatment, if necessary. In addition, the PVA-based fibers may be subjected to an acetalization treatment or the like that has been employed commonly for PVA-based fibers.

The solvent to be used in the spinning stock solution of the PVA-based fibers is not particularly limited, as long as PVA can be dissolved in the solvent. Examples of the solvent include water, dimethyl sulfoxide (DMSO), dimethylformamide, dimethylacetamide and a polyhydric alcohol (e.g., glycerine, ethylene glycol, triethylene glycol). These solvents may be used singly, or two or more of them may be used in combination. In the present invention, when wet spinning is performed, it is preferred to use water or an organic solvent as the solvent. Among these solvents, from the viewpoint of the easiness of feeding of the solvent and the influence of the solvent on an environment impact, water and DMSO are particularly preferred. The concentration of the polymer in the spinning stock solution may be varied depending on the composition and polymerization degree of the PVA-based polymer and the type of the solvent, and is generally 6 to 60% by mass.

In the dry spinning, the above-mentioned solvent may be used. In this case, water may be used, or an organic solvent may be used.

As long as the effects of the present invention cannot be deteriorated, in addition to the PVA-based polymer, an additive or the like may also be contained in the spinning stock solution depending on the intended use. Examples of the additive include boric acid, a surfactant, an antioxidant agent, a decomposition inhibitor, an anti-freezing agent, a pH modifier, a masking agent, a coloring agent and an oil agent.

The solvent to be used in the curing bath may be selected appropriately depending on the types of the solvent used in the spinning stock solution. When the spinning stock solution is an aqueous solution, as the curing bath, an aqueous solution or an alkaline aqueous solution of an inorganic salt that has a curing capability for a PVA-based polymer (e.g., sodium sulfate, ammonium sulfate, sodium carbonate, sodium hydroxide) may be used. When the spinning stock solution is a solution in an organic solvent, as the curing bath, an organic solvent having a curing capability for a PVA-based polymer, including an alcohol such as methanol, ethanol, propanol and butanol and a ketone such as acetone, methyl ethyl ketone and methyl isobutyl ketone, may be used.

In the present invention, PVA-based fibers produced by the dry spinning or PVA-based fibers produced from a spinning stock solution containing water or an organic solvent as the solvent by wet spinning are preferred from the viewpoint of fiber tensile strength.

For the purpose of removing the solvent of the spinning stock solution from a cured raw yarn by extraction, the raw yarn may be passed through an extraction bath, or may be subjected to wet stretching simultaneously with the extraction. In addition, the fibers may be dried if necessary after the wet-stretching, or may be further subjected to dry heat stretching. When the stretching is carried out, the stretching may be carried out at a total draw ratio (i.e., a product of a draw ratio in wet stretching and a draw ratio after drying) of for example 5 to 25 times, preferably about 8 to 20 times.

As the alkali-resistant fibers (C), commercially available fibers may be used. Examples of the commercially available fibers include: organic fibers such as polyvinyl alcohol-based fibers manufactured by Kuraray Co., Ltd., polypropylene fibers manufactured by BarChip Inc., and nylon fibers manufactured by Toray Industries, Inc.; and inorganic fibers such as glass fibers manufactured by Nippon Electric Glass Co., Ltd. and Taiheiyo Materials Corporation.

In one aspect of the present invention, the content of the alkali-resistant fibers (C) is preferably 0.05% by mass or more, more preferably 0.1% by mass or more, still more preferably 0.2% by mass or more, particularly preferably 0.3% by mass or more, and is preferably 5% by mass or less, more preferably 4% by mass or less, still more preferably 3% by mass or less, relative to a total solid content in the cured composite. When the content of the alkali-resistant fibers is equal to or more than the above-mentioned lower limit and is equal to or less than the above-mentioned upper limit, higher bending strength and higher flexural toughness can be achieved in the produced cured composite. The content of the alkali-resistant fibers (C) in the cured composite can be measured by the method mentioned in the section "Examples" below.

<(D) Slag activator>

The cured composite in the present invention may further contain a slag activator (D). When a slag activator (D) is added to the curable composition in the present invention, a cured composite having higher bending strength and/or higher flexural toughness can be produced. Furthermore, the curing time can also be shortened. Even when a shortened curing time is employed, a cured composite having higher bending strength and/or higher flexural toughness can be produced.

Examples of the slag activator (D) include aluminum sulfate, calcium hydroxide, sodium sulfate and sodium aluminate, and these substances may be used singly, or two or more of them may be used in combination. Among these substances, from the viewpoint that high flexural toughness or high dimensional stability can be achieved, it is preferred that the cured composite contains at least one selected from the group consisting of aluminum sulfate, calcium hydroxide and sodium aluminate.

When the cured composite in the present invention contains the slag activator (D), the content is preferably 0.01% by mass or more, more preferably 0.1% by mass or more, still more preferably 0.2% by mass or more, particularly preferably 0.3% by mass or more, and is preferably 3% by mass or less, more preferably 2.5% by mass or less, still more preferably 2% by mass or less, particularly preferably 1.5% by mass or less, relative to a total solid content in the cured composite. When the content is equal to or more than the above-mentioned lower limit and is equal to or less than the above-mentioned upper limit, the above-mentioned effect of the addition of the slag activator (D) can be achieved.

<(E) Aggregate>

The cured composite in the present invention may further contain an aggregate (E). When the cured composite in the present invention contains the aggregate (E), the content is preferably 15% by mass or more, more preferably 20% by mass or more, still more preferably 25% by mass or more, particularly preferably 40% by mass or more, and is preferably 75% by mass or less, more preferably 70% by mass or less, still more preferably 65% by mass or less, particularly preferably 60% by mass or less, relative to a total solid content in the cured composite.

In a preferred aspect of the present invention, the cured composite further contains the aggregate (E), in which the content of the aggregate (E) is 15% by mass or more and 75% by mass or less relative to a total solid content in the cured composite.

When the content is equal to or more than the above-mentioned lower limit and is equal to or less than the above-mentioned upper limit, the above-mentioned effect of the addition of the aggregate (E) can be achieved.

As the aggregate (E), an aggregate that has been used commonly in concrete or mortar may be used. The aggregate (E) is different from the above-mentioned aluminosilicate source (A). The types of the aggregate are classified into: a fine aggregate and a coarse aggregate depending on the size of particles; a natural aggregate and an artificial aggregate depending on origin; and a lightweight aggregate, a common aggregate and a heavyweight aggregate depending on density. These aggregates may be used singly, or two or more of them may be used in combination.

The fine aggregate may be an aggregate having a particle diameter of 5 mm or less. Examples of the fine aggregate include: sand having a particle diameter of 5 mm or less; and a fine aggregate produced by powderizing or granulating an inorganic material (e.g., silica stone, slag, slag particles, various types of sludge, a rock mineral). Examples of the sand include river sand, mountain sand, sea sand, crushed sand, silica sand, slag, glass sand, iron sand, ash sand, calcium carbonate, and artificial sand. These fine aggregates may be used singly, or two or more of them may be used in combination.
The coarse aggregate is an aggregate that contains particles each having a particle diameter of 5 mm or more in an amount of 85% by mass or more relative to the total amount of the coarse aggregate. The coarse aggregate may be an aggregate composed of particles each having a particle diameter of more than 5 mm. Examples of the coarse aggregate include various gravels, an artificial aggregate and a recycled aggregate (e.g., a recycled aggregate from a construction waste material). These coarse aggregates may be used singly, or two or more of them may be used in combination.
Examples of the lightweight aggregate include: a natural lightweight aggregate such as volcanic gravels, expanded slag and coal cinders; and an artificial lightweight aggregate such as expanded vermiculite, expanded perlite, expanded black anesthesia, vermiculite, Shirasu balloons and fly ash micro-balloons. These lightweight aggregates may be used singly, or two or more of them may be used in combination.
In addition to the aggregate (E), the cured composite in the present invention may further contain a functional aggregate. Examples of the functional aggregate include a colored aggregate, a hard aggregate, an elastic aggregate, and an aggregate having a specific shape, more specifically a layered silicate (e.g., mica, talc, kaolin), alumina and silica. The content ratio of the functional aggregate to the amount of the aggregate may be adjusted appropriately depending on the types of the aggregate and the functional aggregate. For example, the ratio of the mass of the aggregate to the mass of the functional aggregate (i.e., an (aggregate)/(functional aggregate) ratio) may be 99/1 to 70/30, preferably 98/2 to 75/25, more preferably 97/3 to 80/20. These functional aggregates may be used singly, or two or more of them may be used in combination.

<(F) Other powder>

The cured composite in the present invention may further contain, as other powder (F), a powder other than the aluminosilicate source (A) and the aggregate (E). Examples of the other powder (F) include a fine powdery substance (e.g., silica fume, slaked lime, unslaked lime, alumina, bentonite), a calcium sulfate derivative (e.g., gypsum dihydrate, $\alpha$- or $\beta$-hemihydrate gypsum, anhydrous gypsum), a foaming agent (e.g., an aluminum powder), a foaming aid (e.g., a metal soap such as a metal stearate and a metal palmitate), and a fluidizing agent (e.g., sodium gluconate, sodium L-tartrate). These powders may be used singly, or two or more of them may be used in combination. Among these powders, from the viewpoint that high bending strength and high dimensional stability can be achieved, at least one selected from the group consisting of silica fume, a calcium sulfate derivative and a fluidizing agent is preferably contained in the cured composite. In particular, it is preferred that the cured composite contains a calcium sulfate derivative, because cracking can be prevented in the cured composite. It is also preferred that the curable composition further contains a fluidizing agent, because the working life of the cured composite composition can be prolonged, and as a result, the fibers can be mixed uniformly. The weight of the cured composite can be reduced by using a foaming agent or a foaming aid or increasing the blend amount of the other powder (F).
When the cured composite in the present invention contains the other powder (F), the content ratio of the other powder (F) is preferably 0.01% by mass or more, more preferably 0.1% by mass or more, still more preferably 0.5% by mass or more, particularly preferably 1% by mass or more, and is preferably 50% by mass or less, more preferably 40% by mass or less, still more preferably 30% by mass or less, furthermore preferably 25% by mass or less, particularly preferably 20% by mass or less, especially preferably 15% by mass or less, relative to a total solid content in the cured composite. In another aspect, it is preferred that the content is 10% by mass or less, 7% by mass or less, 5% by mass or less, or 3% by mass or less. When the content is equal to or more than the above-mentioned lower limit and is equal to or less than the above-mentioned upper limit, the above-mentioned effect of the addition of the other powder (F) can be achieved.
In a preferred aspect of the present invention, the cured composite further contains a calcium sulfate derivative, in which the content of the calcium sulfate derivative is 0.01% by mass or more, more preferably 0.1% by mass or more, and is 20% by mass or less, more preferably 15% by mass or less, relative to a total solid content in the cured composite. In another embodiment, it is preferred that the content is 3% by mass or less, or 2% by mass or less.

<(G) Forming auxiliary>

The cured composite in the present invention is generally produced by a method including a step for forming the curable composition. Therefore, if required, a forming auxiliary (G) may be added to the curable composition. When the forming auxiliary (G) is added, the unevenness in forming of the curable composition can be reduced.

Examples of the forming auxiliary (G) include pulp, a thickening agent (e.g., a cellulose ether such as methyl cellulose, carboxymethyl cellulose, hydroxymethyl cellulose and hydroxyethyl cellulose, polyvinyl alcohol, polyacrylic acid, and lignin sulfonate, which are water-soluble polymeric substances), and various admixture (e.g., an AE agent, a fluidizing agent, a water-reducing agent, a high-range water-reducing agent, an AE water-reducing agent, a high-range AE water-reducing agent, a water retention agent, a water-repellent agent, an expansion agent, a curing promoting agent). These substances may be used singly, or two or more of them may be used in combination. When the forming auxiliary (G) is added to the curable composition, the addition rate is preferably 0.01% by mass or more, more preferably 0.1% by mass or more, still more preferably 0.5% by mass or more, particularly preferably 1% by mass or more, and is preferably 10% by mass or less, more preferably 7% by mass or less, still more preferably 6% by mass or less, particularly preferably 5% by mass or less, relative to a total solid content in the curable composition. When the addition rate is equal to or more than the above-mentioned lower limit and is equal to or less than the above-mentioned upper limit, the above-mentioned effect of the addition of the forming auxiliary can be achieved.

If the fibers are agglomerated in the cured composite, the physical properties of the cured composite may be deteriorated due to the sites at which the agglomeration occurs. Therefore, it is important to reduce the fiber agglomeration degree from the viewpoint that high bending strength and high dimensional stability can be achieved in the cured composite. The fiber agglomeration degree of the cured composite is preferably 10% or less, more preferably 8% or less, still more preferably 6% or less. The lower limit of the fiber agglomeration degree may be 0% or more. The fiber agglomeration degree can be determined by the method mentioned in the section "Examples". When the fiber agglomeration degree is equal to or less than the above-mentioned upper limit, the mechanical strength of the finally produced formed composite can be improved.

The coefficient of variation in the average content of the alkali-resistant fibers (C) contained in each of 10 cut pieces that are cut out from the whole or a part of the cured composite in such a manner that the weight of each of the cut pieces becomes 10 g is preferably 30% or less, more preferably 25% or less, particularly preferably 20% or less. A smaller coefficient of variation in the average content of the alkali-resistant fibers (C) means that the alkali-resistant fibers (C) contained in the cured composite are dispersed more uniformly. In this case, more stable quality and higher strength can be achieved in the cured composite. The coefficient of variation can be determined by the method mentioned in the section "Examples".

The proportional limit of bending strength of the cured composite which is measured in accordance with JIS A 1408 is preferably 3 $N/mm^2$ or more, more preferably 5 $N/mm^2$ or more, still more preferably 5.5 $N/mm^2$ or more, furthermore preferably 6 $N/mm^2$ or more, particularly preferably 7 $N/mm^2$ or more. The upper limit of the proportional limit of bending strength is not particularly limited. The proportional limit of bending strength is generally 30 $N/mm^2$ or less.

The maximum bending strength of the cured composite which is measured in accordance with JIS A 1408 is preferably 3 $N/mm^2$ or more, more preferably 5 $N/mm^2$ or more, still more preferably 7 $N/mm^2$ or more. The upper limit of the maximum bending strength is not particularly limited. The maximum bending strength is generally 50 $N/mm^2$ or less.

The flexural toughness of the cured composite which is measured in accordance with JIS A 1408 is preferably 50 N/mm or more, more preferably 100 N/mm or more, still more preferably 200 N/mm or more. The upper limit of the flexural toughness is not particularly limited. The flexural toughness is generally 1500 N/mm or less.

The dimensional change ratio of the cured composite which is measured in accordance with JIS A 5430 is preferably 0.12% or less, more preferably 0.10% or less, still more preferably 0.08% or less.

<Method for manufacturing cured composite>

The cured composite according to the present invention can be produced by, for example, a method comprising:

a step for mixing a component containing the aluminosilicate source (A) and the alkali activator (B) with water;
a step for adding the alkali-resistant fibers (C) to the resultant mixture to prepare a curable composition; and
a step for forming, curing and drying the curable composition to produce a cured composite.

When the slag activator (D), the aggregate (E), the other powder (F) and the forming auxiliary (G) which may be used as required are used, these optional components can be added in the first mixing step for mixing the component containing the aluminosilicate source (A) and the alkali activator (B) with water.

As the aluminosilicate source (A), the alkali activator (B) and the alkali-resistant fibers (C), and the slag activator (D) which are used in the production method, and the aggregate (E), the other powder (F) and the forming auxiliary (G) which may be used optionally, those substances which are mentioned in the sections <(A) Aluminosilicate source>, <(B) Alkali activator>, <(C) Alkali-resistant fibers>, <(D) Slag activator>, <(E) Aggregate>, <(F) Other powder> and <(G) Forming auxiliary> can be used.

The mixing method to be employed in the first mixing step is not particularly limited. In general, the mixing can be carried out at room temperature (e.g., 25°C) using a known or common mixer or the like (e.g., a mortar mixer, a tilting mixer, a truck mixer, a twin shaft mixer, an omni mixer, a pan mixer, a planetary mixer, an eirich mixer). The order of the charging of the components into a mixer or the like is not particularly limited. The amount of water is not particularly limited, and is generally 30 to 300 parts by mass relative to 100 parts by mass of the aluminosilicate source (A) from the viewpoint that a homogeneous curable composition can be produced without adding an excessive amount of water to the curable composition. The water may be added separately. When water glass is used as the alkali activator (B), the water may be added as a solvent for the water glass. A water-soluble substance [e.g., the alkali activator (B) and, if added, a water-soluble optional component [e.g., the aluminum sulfate served as the slag activator (D)]] may be dissolved in water in advance to prepare an aqueous solution, and the resultant solution may be mixed with a water-insoluble component [e.g., the aluminosilicate source (A) and, if added, a water-insoluble optional component (e.g., the aggregate (E))]. In this case, the aqueous solution may be mixed with a mixture prepared by mixing the water-insoluble components together separately. Each of the mixing times is not particularly limited, and the mixing may be carried out until a homogenous mixture can be produced.

Subsequently, the alkali-resistant fibers (C) are added to the mixture, and the resultant mixture is further mixed. A specific amount of the alkali-resistant fibers (C) may be added at once, or may be added in two or more divided portions. As the method for adding the alkali-resistant fibers (C), from the viewpoint that a homogeneous curable composition can be produced, it is preferred to add the fibers in a state where the fibers are paralleled in one direction and are then bundled. The mixing time after the addition of the fibers is not particularly limited, and the mixing may be carried out until a homogeneous curable composition can be produced. In the homogeneous mixing of the alkali-resistant fibers (C), the temperature of the mixture upon the mixing is an important factor. The temperature of the mixture is preferably 10 to 50°C, more preferably 15 to 40°C, still more preferably 20 to 35°C. When the temperature of the mixture is equal to or higher than the above-mentioned lower limit and is equal to or lower than the above-mentioned upper limit, the fibers can be mixed homogeneously.

Subsequently, the resultant curable composition is formed, and is then cured so that the curable composition can withstand against a production process such as demolding and transportation. In the production method according to the present invention, the curable composition can be formed by a known technique such as a so-called casting method in which the curable composition is poured into an open formwork, a dehydration molding method in which the curable composition is pressed or sucked to dehydrate the curable composition, an injection molding method in which the curable composition is injected into a closed formwork, and an extrusion method in which the curable composition can be formed through a die into a certain shape. In the extrusion method, a vacuum extruder may be used. During the forming, a pressure and/or vibrations may be applied as required, or the curable composition may be compressed by a press using an upper surface forming die, a roll or the like. The curing may be carried out generally under ambient pressure or under pressuring at a temperature of 20 to 95°C, e.g., 25°C or 90°C, at a relative humidity of 20 to 99%. The curing time may be set appropriately depending on the pressure, temperature and/or humidity at which the curing is carried out. The curing time may become shorter with the increase in the pressure, temperature and humidity, and the curing time may become longer with the decrease in pressure, temperature and humidity. For example, when the atmospheric pressure steam curing (wet curing) is carried out at a temperature of 80°C and a humidity of 90% or more, the curing may be carried out for about 4 to 24 hours. The curable composition is cured as the result of the curing. Subsequently, additional curing may be carried out. In this case, the curing conditions for the additional curing may be the same as or different from those employed in the first curing procedure.

The cured and undried composite obtained after curing is dried until a specified water content can be achieved. When the cured composite has a specified water content, the cured composite can have both of high bending strength and high dimensional stability.

From the viewpoint that higher bending strength and higher flexural toughness can be achieved, the drying temperature is preferably 60°C or higher, more preferably 80°C or higher, still more preferably 100°C or higher, particularly preferably 100°C or higher (e.g., 105°C or higher). From the viewpoint that the problem of occurrence of cracking associated with too high temperature can be avoided, the drying temperature is preferably 250°C or lower, more preferably 200°C or lower, particularly preferably 160°C or lower.

The drying time may be selected appropriately depending on the size or shape of the cured and undried composite, the drying temperature and the like.

The drying method for the cured and undried composite is not particularly limited. For example, the cured and undried composite can be dried by employing a hot air drying method. In order to perform the drying with high efficiency, it is preferred that the temperature in the dryer is increased over a certain time (e.g., 30°C/h) so as to uniformly increase the temperature of the cured composite, and then the cured composite is dried at a predetermined drying temperature/time.

The cured composite thus produced is based on the curable composition having excellent uniformity due to the specific chemical composition and has a specific water content. In addition, it is considered that, due to the production by the above-mentioned method, the curing reaction proceeds substantially completely and the further increase in denseness between the fibers and the polymer matrix is achieved. As a result, the cured composite can have both of high bending strength and high dimensional stability.

## EXAMPLES

The present invention will be explained in more detail by way of Examples and Comparative Examples. However, the present invention is not limited to these Examples. The properties in Examples and Comparative Examples were measured or evaluated by the following methods.

[Water content in cured composite]

In order to adjust the initial water content in the cured composite to a constant value upon the measurement of the water content in the cured composite, a cured composite to be measured was dried for 72 hours in a dryer that had been set at 40°C, and then the mass of the cured composite was measured. The mass was defined as a reference mass $W_1$ (g) of the cured composite.

Subsequently, the cured composite was dried for 24 hours in a drier that had been set to 100°C, and the mass $W_2$ (g) of the cured composite was measured. The water content X (% by mass) in the cured composite was calculated in accordance with the following formula.

[Mathematical formula 1]

$$\text{Water content X (\% by mass) in cured composite} = \{(W_2 - W_1)/W_1\} \times 100$$

[Bending strength and flexural toughness of cured composite]

In order to adjust the water content in the cured composite to a constant value upon the measurement of bending strength and flexural toughness of the cured composite, a cured composite to be measured was dried for 72 hours in a dryer that had been set to 40°C. Subsequently, bending strength and flexural toughness of the cured composite was measured in accordance with JIS A 1408. The bending strength was measured using autograph "AG-50kNX" manufactured by Shimadzu Corporation in a center loading mode under the conditions including a bending span of 14.6 cm and a test speed (loading head speed) of 2 mm/min. LOP and MOR shown in Table 5 represent proportional limit of bending strength and maximum bending strength, respectively.

[Method for measuring dimensional change ratio]

The dimensional change ratio of a cured composite was measured in accordance with JIS A 5430.

Firstly, a cured composite to be measured was placed in a drier, then the temperature of the drier was kept at 60°C±3°C for 24 hours, and then the cured composite was removed from the drier. The removed cured composite was placed in a desiccator that had been humidified with silica gel, and was then allowed to leave until the temperature reached 20±1.5°C. Subsequently, a milky glass was bonded onto the cured composite, then gauge lines were carved in such a manner that the distance between the gauge lines became about 140 mm, then the length between the gauge lines was measured with a comparator having an accuracy of 1/500 mm, and the measured length was defined as $L_1$ (mm). Subsequently, the cured composite was laid on end in such a manner that the direction of the length of the cured composite became horizontal, and then the cured composite was immersed in water at 20°C±1.5°C in such a manner that the upper end of the cured composite was located at about 30 mm below the water surface. After 24 hours, the cured composite was removed from the water, then water adhering to the cured composite was swabbed, then the length between the gauge lines was measured again, and the measured length was defined as $L_2$ (mm). The dimensional change ratio Y (%) due to the absorption of water was calculated in accordance with the following formula.

[Mathematical formula 2]

$$\text{(Dimensional change ratio due to absorption of water) Y (\%)} = \{(L_2 - L_1)/L_1\} \times 100$$

A smaller dimensional change ratio Y means that the dimensional stability is higher.

[Average content and its coefficient of variation of alkali-resistant fibers (C)]

Arbitrarily pick up 11 pieces cut out from the composite so that each pieces weighs 10 g, then the cut pieces were dried at 105°C for 3 hours, and then weights ($W_1$ to $W_{11}$ (g)) of the cut pieces were measured.

One of the 11 cut pieces was pulverized with a mortar. In this section, the explanation is made under the assumption that a cut piece having a weight of $W_{11}$ (g) was pulverized. After the pulverization, water was added to the pulverized product, and the resultant dispersion was filtrated through a 10-mesh metal mesh to separate between the alkali-resistant fibers (C) and the matrix. Subsequently, a filtrate was further filtrated through a paper filter to collect the matrix, then the matrix was dried at 105°C for 3 hours, and then the weight $W_{11-1}$ (g) of the matrix was weighed. Subsequently, the matrix was charged in a maffle furnace set at 600°C for 30 minutes, then the matrix was cooled, then the weight $W_{11-2}$ (g) of the matrix was measured, and the weight reduction ratio X (%) of the matrix was calculated in accordance with the following formula.

[Mathematical formula 3]

$$\text{Weight reduction ratio X (\%) of matrix} = \{(W_{11-1} - W_{11-2})/W_{11-1}\} \times 100$$

Subsequently, the residual 10 cut pieces (cut pieces respectively having weights of $W_1$ to $W_{10}$ (g)) were charged in a maffle furnace set at 600°C for 30 minutes to burn the alkali-resistant fibers (C) in the cut pieces, then the cut pieces were cooled, and then the weights ($W_{1-1}$ to $W_{10-1}$ (g)) of the cut pieces were measured.

The content of the alkali-resistant fibers (C) in the cut piece having a weight of $W_1$ (g) was calculated in accordance with the following formula.

[Mathematical formula 4]

$$\text{Content (\%) of alkali-resistant fibers (C) in cut piece having weight } W_1 = [\{W_1 \times (100 - X)/100 - W_{1-1}\}/W_1] \times 100$$

With respect to the cut pieces respectively having weights of Wz to $W_{10}$ (g), the content of the alkali-resistant fibers (C) was calculated in the same manner as mentioned above.

Furthermore, a standard deviation and an average value of the contents of the alkali-resistant fibers (C) in the cut pieces respectively having weights of $W_1$ to $W_{10}$ (g) were calculated, and the coefficient of variation in the average content of the alkali-resistant fibers (C) was calculated in accordance with the following formula.

[Mathematical formula 5]

$$\text{Coefficient (\%) of variation in contents of alkali-resistant fibers (C)} = \{(\text{standard deviation of content (\%) of alkali-resistant fibers (C) in each of cut pieces})/(\text{average value of contents (\%) of alkali-resistant fibers (C)})\} \times 100$$

From the content of the alkali-resistant fibers (C) in each of the cut pieces respectively having weights of $W_1$ to $W_{10}$ (g) which was determined by the above-mentioned method, the value of part by mass of the alkali-resistant fibers (C) relative to 100 parts by mass of each of the cut pieces was calculated. The average value of the calculated values was determined and was defined as the value of parts by mass of the alkali-resistant fibers (C) relative to 100 parts by mass of the cured composite.

[Fiber agglomeration degree of cured composite]

A piece was cut out from a cured composite in such a manner that the weight of the piece became 100 g, and was then pulverized with a mortar. After the pulverization, water was added to the pulverized product, and the resultant dispersion was filtrated through a 10-mesh metal mesh to separate between the alkali-resistant fibers (C) and the matrix. Fiber balls (i.e., agglomerates that were bundles or masses composed of 20 or more fibers) formed as the result of the agglomeration of fibers and left on the metal mesh were picked up with tweezers. Fibers left on the metal mesh were also picked up. The fibers were dried over 24 hours in a drier that had been set at 100°C, and the mass $W_a$ (g) of the dispersed fibers and the mass $W_b$ (g) of the fiber balls formed as the result of the agglomeration of the fibers were measured. The fiber agglomeration degree (i.e., the mass of the fiber balls relative to the total mass of the alkali-resistant fibers (C) contained in the cured composite) was calculated in accordance with the following formula.

[Mathematical formula 6]

$$\text{Fiber agglomeration degree (\%) of cured composite} = \{(W_b/(W_a + W_b)\} \times 100$$

[Example 1]

A curable composition was prepared using the materials shown in Tables 1 and 2 below at a ratio shown in Table 2, and then a cured composite of the curable composition was produced.

More specifically, sodium hydroxide was dissolved in water in an amount corresponding to 35% by mass relative to the total mass of the aluminosilicate source (A) and the other powder (F) to prepare a solution of the alkali activator (B). Subsequently, granulated blast furnace slag (Fine Cerament 20A: specific surface area 6000 $cm^2/g$) (36.8% by mass) and fly ash (Yonden fly ash type II; manufactured by Yonden Business Co., Inc.) (9.7% by mass) that served as the aluminosilicate source (A), silica fume (EFACO silica fume; manufactured by Tomoe Engineering Co., Ltd.) (2.0% by mass) that served as the other powder (F), and sand (composed of silica sand No. 5 manufactured by Tohoku Keisa Co., Ltd. and silica sand No. 7 manufactured by Tohoku Keisa Co., Ltd. at a ratio of 2 : 1 by mass) (48.0% by mass) that served as the aggregate (E) were charged into a mortar mixer and were then mixed together for 1 minute, then the alkali activator solution was charged into the mortar mixer, and then the resultant mixture was mixed for 1 minutes. Subsequently, sodium gluconate (0.1% by mass) that served as the other powder (F) was charged into the mortar mixer, and the resultant mixture was further mixed for 3 minutes. Subsequently, PVA fibers (polyvinyl alcohol-based fibers manufactured by Kuraray Co., Ltd.; also referred to as "PVA1", hereinafter) (0.7% by mass) that served as the alkali-resistant fibers (C) and had been paralleled in one direction and bundled were charged into the mortar mixer, and the resultant mixture was further mixed for 1 minutes to produce a curable composition. The curable composition was poured into a formwork having a size of (width: 4 cm) × (length: 18 cm) × (thickness: 1 cm), and was then cured under ambient pressure under the conditions of 90°C × RH95% for 24 hours, and was then demolded. The resultant product was dried for 4 hours in a blower constant-temperature dryer that had been set at 110°C to produce a cured composite.

The cured composite was evaluated as mentioned above. The results are shown in Table 5.

[Examples 2 to 3]

Cured composites were produced and evaluated in the same manner as in Example 1, except that the drying conditions were changed as shown in Table 2.

[Example 4]

A cured composite was produced and evaluated in the same manner as in Example 2, except that the content ratio of the alkali-resistant fibers was changed from 0.7% by mass to 1.4% by mass and, due to this change, the content ratio of the blast furnace slag and the content ratio of sand that served as the aggregate (E) were also changed as shown in Table 2.

[Example 5]

A cured composite was produced and evaluated in the same manner as in Example 2, except that the type and content ratio of the alkali-resistant fibers are changed and, due to this change, the content ratio of the blast furnace slag, the content ratio of fly ash, the content ratio of the silica fume and the content ratio of sand that served as the aggregate (E) were also changed as shown in Table 2.

[Example 6]

A cured composite was produced and evaluated in the same manner as in Example 2, except that the type and content ratio of the alkali-resistant fibers were changed and, due to this change, the content ratio of the blast furnace slag and the content ratio of fly ash were also changed as shown in Table 2.

[Example 7]

A cured composite was produced and evaluated in the same manner as in Example 2, except that the type and content ratio of the alkali-resistant fibers were changed and, due to this change, the content ratio of the blast furnace slag was also changed as shown in Table 2.

[Example 8]

A cured composite was produced and evaluated in the same manner as in Example 2, except that the content ratio of the blast furnace slag and the content ratio of fly ash were changed and, due to this change, the content ratio of sand that served as the aggregate (E) was also changed as shown in Table 2.

[Example 9]

A cured composite was produced and evaluated in the same manner as in Example 2, except that, instead that the solution of the alkali activator (B) was prepared by dissolving sodium hydroxide in water in an amount corresponding to 35% by mass relative to the total mass of the aluminosilicate source (A) and the other powder (F), a solution of the alkali activator (B) was prepared by dissolving sodium hydroxide and water glass No. 3 in water in an amount corresponding to 30% by mass relative to the total mass of the aluminosilicate source (A) and the other powder (F), and the content ratios of the materials other than the alkali-resistant fibers (C) and the sodium gluconate were changed.

[Example 10]

A cured composite was produced and evaluated in the same manner as in Example 9, except that the drying conditions were changed as shown in Table 2.

[Example 11]

A cured composite was produced and evaluated in the same manner as in Example 9, except that blast furnace slag, fly ash and metakaolin were used in place of blast furnace slag and fly ash that served as the aluminosilicate source (A), and the content ratios of the materials other than the alkali-resistant fibers (C) and the aggregate (E) were changed as shown in Table 2.

[Example 12]

A cured composite was produced and evaluated in the same manner as in Example 11, except that the drying conditions were changed as shown in Table 2.

[Example 13]

A cured composite was produced and evaluated in the same manner as in Example 2, except that, instead that granulated blast furnace slag and fly ash that served as the aluminosilicate source (A), silica fume that served as the other powder (F), and the aggregate (E) were charged into the mortar mixer, aluminum sulfate that served as the slag activator (D) was also charged into the mortar mixer in addition to the above-mentioned materials, and the content ratios of granulated blast furnace slag and the aggregate (E) were changed.

[Example 14]

A cured composite was produced and evaluated in the same manner as in Example 13, except that the curing time was changed from 12 hours to 24 hours.

[Example 15]

A cured composite was produced and evaluated in the same manner as in Example 14, except that the content of aluminum sulfate that served as the slag activator (D) was changed and, due to this change, the content ratio of the blast furnace slag and the content ratio of sand that served as the aggregate (E) were also changed as shown in Table 2.

[Example 16]

A cured composite was produced and evaluated in the same manner as in Example 14, except that the content ratio of aluminum sulfate that served as the slag activator (D) was changed and, due to this change, the content ratio of the blast furnace slag, the content ratio of fly ash, the content ratio of the silica fume and the content ratio of sand that served as the aggregate (E) were also changed as shown in Table 2.

[Example 17]

A cured composite was produced and evaluated in the same manner as in Example 2, except that, instead that the solution of the alkali activator (B) was prepared by dissolving sodium hydroxide in water in an amount corresponding to 35% by mass relative to the total mass of the aluminosilicate source (A) and the other powder (F), a solution of the alkali activator (B) was prepared by dissolving sodium hydroxide and water glass No. 3 in water in an amount corresponding to 30% by mass relative to the total mass of the aluminosilicate source (A), the slag activator (D) and the other powder (F), and the content ratios of the materials other than the alkali-resistant fibers (C) and the sodium gluconate were changed.

[Example 18]

A cured composite was produced and evaluated in the same manner as in Example 17, except that the drying conditions were changed as shown in Table 2.

[Example 19]

A cured composite was produced and evaluated in the same manner as in Example 2, except that, instead that granulated blast furnace slag and fly ash that served as the aluminosilicate source (A), silica fume that served as the other powder (F) and the aggregate (E) were charged into the mortar mixer, gypsum dihydrate that served as the other powder (F) was also charged into the mortar mixer in addition to the above-mentioned materials, and the content ratio of the aggregate (E) was changed.

[Example 20]

A cured composite was produced and evaluated in the same manner as in Example 19, except that the content of gypsum dihydrate was changed and, due to this change, the content ratio of the blast furnace slag and the content ratio of sand that served as the aggregate (E) were also changed as shown in Table 2.

[Example 21]

A cured composite was produced and evaluated in the same manner as in Example 19, except that the content of gypsum dihydrate was changed and, due to this change, the content ratio of the blast furnace slag, the content ratio of fly ash and the content ratio of sand that served as the aggregate (E) were also changed as shown in Table 2.

[Example 22]

A cured composite was produced and evaluated in the same manner as in Example 2, except that, instead that granulated blast furnace slag and fly ash that served as the aluminosilicate source (A), silica fume that served as the other powder (F) and the aggregate (E) were charged into the mortar mixer, aluminum sulfate that served as the slag activator (D) and gypsum dihydrate that served as the other powder (F) were also charged into the mortar mixer in addition to the above-mentioned materials, and the content ratios of granulated blast furnace slag, fly ash and the aggregate (E) were changed.

[Example 23]

An alkali activator solution was prepared by dissolving sodium hydroxide in water in an amount corresponding to 54% by mass relative to the total mass of the aluminosilicate source (A), the other powder (F) and the forming auxiliary (G). Subsequently, granulated blast furnace slag (Fine Cerament 20A: specific surface area 6000 $cm^2/g$) (36.8% by mass) and fly ash (Yonden fly ash type II; manufactured by Yonden Business Co., Inc.) (9.9% by mass) that served as the aluminosilicate source (A), silica fume (EFACO silica fume; manufactured by Tomoe Engineering Co., Ltd.) (2.0% by mass) that served as the other powder (F), pulp (LBKP) (2.0% by mass) that served as the forming auxiliary (G), a thickening agent (carboxymethyl cellulose) (0.7% by mass) and sand (composed of 2 : 1 silica sand No. 5 manufactured by Tohoku Keisa Co., Ltd. and silica sand No. 7 manufactured by Tohoku Keisa Co., Ltd. at a mixing ratio of 2 : 1) (42.9% by mass) that served as the aggregate (E) were charged into an eirich mixer and were then mixed together for 1 minute, then the alkali activator solution was charged into the eirich mixer, and then the resultant mixture was mixed for 3 minutes. The resultant crude kneaded product and sodium gluconate (0.1% by mass) that served as the other powder (F) were charged into a twin-roll kneader and were mixed for 4 minutes. Subsequently, PVA fibers (polyvinyl alcohol-based fibers, "PVA2"; manufactured by Kuraray Co., Ltd.) (0.8% by mass) were charged into the twin-roll kneader, and the resultant mixture was further mixed for 2 minutes. The resultant clay-like kneaded product was subjected to extrusion molding using a vacuum extruder under a reduced pressure of 740 mmHg into a plate-like product having a width of 30 cm and a thickness of 1 cm. The resultant molded plate was covered with a vinyl sheet, and was then cured under ambient pressure under the conditions of 90°C × RH95% for 24 hours. The resultant product was dried for 8 hours in a blower constant-temperature dryer that has been set at 110°C, and was then cut into a piece having a size of (4 cm in wide)×(18 cm in long). In this manner, a cured composite was produced.

The cured composite was evaluated as mentioned above. The results are shown in Table 5.

[Example 24]

A cured composite was produced and evaluated in the same manner as in Example 23, except that the curing time was changed from 12 hours to 24 hours.

[Example 25]

A cured composite was produced and evaluated in the same manner as in Example 2, except that the content ratio of the blast furnace slag, the content ratio of fly ash, the content ratio of sodium hydroxide that served as the alkali activator (B) and the content ratio of sand that served as the aggregate (E) were changed as shown in Table 3.

[Example 26 to 27]

A cured composite was produced and evaluated in the same manner as in Example 2, except that the content ratio of the blast furnace slag and the content ratio of fly ash were changed as shown in Table 3.

[Example 28]

A cured composite was produced and evaluated in the same manner as in Example 2, except that the curing temperature was changed from 90°C to 60°C.

[Example 29]

A cured composite was produced and evaluated in the same manner as in Example 2, except that the content ratio of the blast furnace slag, the content ratio of fly ash, the content ratio of sodium hydroxide that served as the alkali activator (B), the content ratio of the alkali-resistant fibers (C) and the content ratio of sand that served as the aggregate (E) were changed as shown in Table 3, an aluminum powder and slaked lime were used in place of silica fume and sodium gluconate that served as the other powder (F), and the aluminum powder was further charged and mixed after the charging and mixing of the alkali-resistant fibers (C) as mentioned in Example 2.

[Example 30]

A cured composite was produced and evaluated in the same manner as in Example 19, except that the content ratio of the blast furnace slag, the content ratio of fly ash, the content ratio of sodium hydroxide that served as the alkali activator (B), the content ratio of the alkali-resistant fibers (C), the content ratio of sand that served as the aggregate (E) and the content of gypsum dihydrate were changed as shown in Table 3, an aluminum powder and slaked lime were used without using silica fume and sodium gluconate, and the aluminum powder was further charged and mixed after the charging and mixing of the alkali-resistant fibers (C) as mentioned in Example 19.

[Example 31]

A cured composite was produced and evaluated in the same manner as in Example 19, except that the content ratio of the blast furnace slag, the content ratio of fly ash, the content ratio of sodium hydroxide that served as the alkali activator (B), the content ratio of the alkali-resistant fibers (C), the content ratio of sand that served as the aggregate (E) and the content of gypsum dihydrate were changed as shown in Table 3, red mud was further used as the aluminosilicate source (A), an aluminum powder and slaked lime were used without using silica fume and sodium gluconate, and the aluminum powder was further charged and mixed after the charging and mixing of the alkali-resistant fibers (C) as mentioned in Example 19.

[Example 32]

A cured composite was produced and evaluated in the same manner as in Example 19, except that the content ratio of the blast furnace slag, the content ratio of fly ash, the content ratio of sodium hydroxide that served as the alkali activator (B), the content ratio of the alkali-resistant fibers (C), the content ratio of sand that served as the aggregate (E) and the content of gypsum dihydrate were changed as shown in Table 3, red mud was further used as the aluminosilicate source (A), and slaked lime was used without using silica fume and sodium gluconate.

[Comparative Example 1]

A cured composite was produced and evaluated in the same manner as in Example 2, except that the content ratio of sodium hydroxide that served as the alkali activator (B) was changed to a content ratio larger than 10% by mass relative to a total solid content in the curable composition and, due to this change, the content ratio of the blast furnace slag, the content ratio of fly ash, the content ratio of the silica fume and the content ratio of sand that served as the aggregate (E) were also changed as shown in Table 4.

[Comparative Example 2]

A cured composite was produced and evaluated in the same manner as in Example 2, except that the content of the blast furnace slag relative to the total solid content in the aluminosilicate source (A) was changed to a content ratio less than 40% by mass and, due to this change, the content ratio of fly ash and the content ratio of sand that served as the aggregate (E) were also changed as shown in Table 4.

[Comparative Example 3]

A cured composite was produced and evaluated in the same manner as in Example 2, except that the alkali-resistant fibers (C) were not used and, due to this change, the content ratio of the blast furnace slag, the content ratio of fly ash and the content ratio of sand that served as the aggregate (E) were also changed as shown in Table 4, and the drying was not carried out.

[Comparative Example 4]

A cured composite was produced and evaluated in the same manner as in Example 1, except that the alkali-resistant fibers (C) were not used and, due to this change, the content ratio of the blast furnace slag, the content ratio of fly ash and the content ratio of sand that served as the aggregate (E) were also changed as shown in Table 4.

[Comparative Example 5]

A cured composite was produced and evaluated in the same manner as in Example 2, except that the alkali-resistant fibers (C) were not used and, due to this change, the content ratio of the blast furnace slag, the content ratio of fly ash and the content ratio of sand that served as the aggregate (E) were also changed as shown in Table 4.

[Comparative Example 6]

A cured composite was produced and evaluated in the same manner as in Example 1, except that the drying was not carried out.

[Comparative Example 7]

A cured composite was produced and evaluated in the same manner as in Example 6, except that the drying was not carried out.

[Comparative Example 8]

A cured composite was produced and evaluated in the same manner as in Example 7, except that the drying was not carried out.

[Comparative Example 9]

A cured composite was produced and evaluated in the same manner as in Example 8, except that the drying was not carried out.

[Comparative Examples 10 to 11]

Cured composites were produced and evaluated in the same manner as in Example 1, except that the drying conditions were changed as shown in Table 4.

The properties of the fibers used in Examples and Comparative Examples are shown in Table 1 below. The compositions employed in Examples and the compositions employed in Comparative Examples are shown in Tables 2 to 4. In Table 5, the results of the evaluation of the cured composites produced in Examples and Comparative Example are shown.

[Table 1]

Table 1: Properties of fibers

| | Fiber diameter [μm] | Fiber length [mm] | Fiber tensile strength [cN/dtex] |
|---|---|---|---|
| PVA1 (polyvinyl alcohol-based fiber manufactured by Kuraray Co., Ltd.) | 24 | 6 | 13.8 |
| PVA2 (polyvinyl alcohol-based fiber manufactured by Kuraray Co., Ltd.) | 38 | 6 | 12.0 |
| PVA3 (polyvinyl alcohol-based fiber manufactured by Kuraray Co., Ltd.) | 200 | 6 | 8.5 |
| PP (polypropylene fiber manufactured by Valchip Co., Ltd.) | 65 | 12 | 5.5 |
| Nylon (nylon fiber manufactured by Toray Industries, Inc.) | 28 | 10 | 7.9 |

[Table 2]

Table 2: Compositions in Examples

| Example No. | Aluminosilicate source (A) | | | | Alkali activator (B) | | Alkali-resistant fibers (C) | | Slag activator (D) | Aggregate (E) | Other powder (F) | | | | | Forming auxiliary (G) | | Content of aluminosilicate source (A) | Content of blast furnace slag | Content of alkali activator (B) | Curing conditions | | Drying conditions | |
|---|---|---|---|---|---|---|---|---|---|---|---|---|---|---|---|---|---|---|---|---|---|---|---|---|
| | Blast furnace slag | Fly ash | Metakaolin | Red mud | Sodium hydroxide | Water glass No. 3 | | | Aluminum sulfate | Sand | Silica fume | Gypsum dihydrate | Sodium gluconate | Aluminum powder | Slaked lime | Pulp | Thickening agent | | | | | | | |
| | % by mass | | | | % by mass | | Type | % by mass | % by mass | % by mass | % by mass | | | | | % by mass | | % by mass | % by mass | % by mass | °C | Hour | °C | Hour |
| 1 | 36.8 | 9.7 | - | - | 2.7 | - | PVA1 | 0.7 | - | 48.0 | 2.0 | - | 0.1 | - | - | - | - | 46.5 | 79.1 | 2.7 | 90 | 24 | 110 | 4 |
| 2 | 36.8 | 9.7 | - | - | 2.7 | - | PVA1 | 0.7 | - | 48.0 | 2.0 | - | 0.1 | - | - | - | - | 46.5 | 79.1 | 2.7 | 90 | 24 | 110 | 8 |
| 3 | 36.8 | 9.7 | - | - | 2.7 | - | PVA1 | 0.7 | - | 48.0 | 2.0 | - | 0.1 | - | - | - | - | 46.5 | 79.1 | 2.7 | 90 | 24 | 150 | 4 |
| 4 | 36.5 | 9.7 | - | - | 2.7 | - | PVA1 | 1.4 | - | 47.6 | 2.0 | - | 0.1 | - | - | - | - | 46.2 | 79.0 | 2.7 | 90 | 24 | 110 | 8 |
| 5 | 36.1 | 9.5 | - | - | 2.7 | - | PVA3 | 2.8 | - | 46.9 | 1.9 | - | 0.1 | - | - | - | - | 45.6 | 79.2 | 2.7 | 90 | 24 | 110 | 8 |
| 6 | 36.9 | 9.8 | - | - | 2.7 | - | PP | 0.5 | - | 48.0 | 2.0 | - | 0.1 | - | - | - | - | 46.7 | 79.0 | 2.7 | 90 | 24 | 110 | 8 |
| 7 | 36.9 | 9.7 | - | - | 2.7 | - | Nylon | 0.6 | - | 48.0 | 2.0 | - | 0.1 | - | - | - | - | 46.6 | 79.2 | 2.7 | 90 | 24 | 110 | 8 |
| 8 | 46.8 | - | - | - | 2.7 | - | PVA1 | 0.7 | - | 47.7 | 2.0 | - | 0.1 | - | - | - | - | 46.8 | 100 | 2.7 | 90 | 24 | 110 | 8 |
| 9 | 36.0 | 9.4 | - | - | 2.0 | 3.2 | PVA1 | 0.7 | - | 46.7 | 1.9 | - | 0.1 | - | - | - | - | 45.4 | 79.3 | 5.2 | 90 | 24 | 110 | 8 |
| 10 | 36.0 | 9.4 | - | - | 2.0 | 3.2 | PVA1 | 0.7 | - | 46.7 | 1.9 | - | 0.1 | - | - | - | - | 45.4 | 79.3 | 5.2 | 90 | 24 | 150 | 4 |
| 11 | 31.3 | 8.3 | 3.9 | - | 2.7 | 4.0 | PVA1 | 0.7 | - | 47.0 | 2.0 | - | 0.1 | - | - | - | - | 43.5 | 72.0 | 6.7 | 90 | 24 | 110 | 8 |
| 12 | 31.3 | 8.3 | 3.9 | - | 2.7 | 4.0 | PVA1 | 0.7 | - | 47.0 | 2.0 | - | 0.1 | - | - | - | - | 43.5 | 72.0 | 6.7 | 90 | 24 | 150 | 4 |
| 13 | 36.2 | 9.7 | - | - | 2.7 | - | PVA1 | 0.7 | 0.3 | 48.3 | 2.0 | - | 0.1 | - | - | - | - | 45.9 | 78.9 | 2.7 | 90 | 12 | 110 | 8 |
| 14 | 36.2 | 9.7 | - | - | 2.7 | - | PVA1 | 0.7 | 0.3 | 48.3 | 2.0 | - | 0.1 | - | - | - | - | 45.9 | 78.9 | 2.7 | 90 | 24 | 110 | 8 |
| 15 | 36.1 | 9.7 | - | - | 2.7 | - | PVA1 | 0.7 | 0.6 | 48.1 | 2.0 | - | 0.1 | - | - | - | - | 45.8 | 78.8 | 2.7 | 90 | 24 | 110 | 8 |
| 16 | 36.0 | 9.6 | - | - | 2.7 | - | PVA1 | 0.7 | 1.1 | 47.9 | 1.9 | - | 0.1 | - | - | - | - | 45.6 | 78.9 | 2.7 | 90 | 24 | 110 | 8 |
| 17 | 35.4 | 9.4 | - | - | 1.8 | 3.0 | PVA1 | 0.7 | 0.5 | 47.2 | 1.9 | - | 0.1 | - | - | - | - | 44.8 | 79.0 | 4.8 | 90 | 24 | 110 | 8 |
| 18 | 35.4 | 9.4 | - | - | 1.8 | 3.0 | PVA1 | 0.7 | 0.5 | 47.2 | 1.9 | - | 0.1 | - | - | - | - | 44.8 | 79.0 | 4.8 | 90 | 24 | 150 | 4 |
| 19 | 36.8 | 9.7 | - | - | 2.7 | - | PVA1 | 0.7 | - | 47.9 | 2.0 | 0.1 | 0.1 | - | - | - | - | 46.5 | 79.1 | 2.7 | 90 | 24 | 110 | 8 |
| 20 | 36.7 | 9.7 | - | - | 2.7 | - | PVA1 | 0.7 | - | 47.8 | 2.0 | 0.3 | 0.1 | - | - | - | - | 46.4 | 79.1 | 2.7 | 90 | 24 | 110 | 8 |
| 21 | 36.4 | 9.6 | - | - | 2.7 | - | PVA1 | 0.7 | - | 47.5 | 2.0 | 1.0 | 0.1 | - | - | - | - | 46.0 | 79.1 | 2.7 | 90 | 24 | 110 | 8 |
| 22 | 35.9 | 9.6 | - | - | 2.7 | - | PVA1 | 0.7 | 0.6 | 47.8 | 2.0 | 0.6 | 0.1 | - | - | - | - | 45.5 | 78.9 | 2.7 | 90 | 24 | 110 | 8 |
| 23 | 36.8 | 9.9 | - | - | 4.8 | - | PVA2 | 0.8 | - | 42.9 | 2.0 | - | 0.1 | - | - | 2.0 | 0.7 | 46.7 | 78.8 | 4.8 | 90 | 12 | 110 | 8 |
| 24 | 36.8 | 9.9 | - | - | 4.8 | - | PVA2 | 0.8 | - | 42.9 | 2.0 | - | 0.1 | - | - | 2.0 | 0.7 | 46.7 | 78.8 | 4.8 | 90 | 24 | 110 | 8 |

[Table 3]

Table 3:

| Example No. | Aluminosilicate source (A) | | | | Alkali activator (B) | | Alkali-resistant fibers (C) | | Slag activator (D) | Aggregate (E) | Other powder (F) | | | | | Forming auxiliary (G) | | Content of aluminosilicate source (A) | Content of blast furnace slag | Content of alkali activator (B) | Curing conditions | | Drying conditions | |
|---|---|---|---|---|---|---|---|---|---|---|---|---|---|---|---|---|---|---|---|---|---|---|---|---|
| | Blast furnace slag | Fly ash | Metakaolin | Red mud | Sodium hydroxide | Water glass No. 3 | | | Aluminum sulfate | Sand | Silica fume | Gypsum dihydrate | Sodium gluconate | Aluminum powder | Slaked lime | Pulp | Thickening agent | | | | | | | |
| | % by mass | | | | % by mass | | Type | % by mass | % by mass | % by mass | % by mass | | | | | % by mass | | % by mass | % by mass | % by mass | °C | Hour | °C | Hour |
| 25 | 46.3 | 12.1 | - | - | 3.1 | - | PVA1 | 0.7 | - | 35.7 | 2.0 | - | 0.1 | - | - | - | - | 58.4 | 79.3 | 3.1 | 90 | 24 | 110 | 8 |
| 26 | 19.5 | 27.0 | - | - | 2.7 | - | PVA1 | 0.7 | - | 48.0 | 2.0 | - | 0.1 | - | - | - | - | 46.5 | 41.9 | 2.7 | 90 | 24 | 110 | 8 |
| 27 | 23.3 | 23.3 | - | - | 2.7 | - | PVA1 | 0.7 | - | 47.9 | 2.0 | - | 0.1 | - | - | - | - | 46.6 | 50.0 | 2.7 | 90 | 24 | 110 | 8 |
| 28 | 36.8 | 9.7 | - | - | 2.7 | - | PVA1 | 0.7 | - | 48.0 | 2.0 | - | 0.1 | - | - | - | - | 46.5 | 79.1 | 2.7 | 60 | 24 | 110 | 8 |
| 29 | 60.0 | 5.0 | - | - | 2.8 | - | PVA1 | 0.5 | - | 20.9 | - | - | - | 0.8 | 10.0 | - | - | 65.0 | 92.3 | 2.8 | 90 | 24 | 110 | 8 |
| 30 | 25.0 | 35.0 | - | - | 2.8 | - | PVA1 | 0.5 | - | 15.9 | - | 10.0 | - | 0.8 | 10.0 | - | - | 60.0 | 41.7 | 2.8 | 90 | 24 | 110 | 8 |
| 31 | 25.0 | 5.0 | - | 30.0 | 0.5 | - | PVA1 | 0.5 | - | 18.7 | - | 10.0 | - | 0.8 | 9.5 | - | - | 60.0 | 41.7 | 0.5 | 90 | 24 | 110 | 8 |
| 32 | 25.0 | 5.0 | - | 30.0 | 1.0 | - | PVA1 | 0.9 | - | 19.1 | - | 10.0 | - | - | 9.0 | - | - | 60.0 | 41.7 | 1.0 | 90 | 24 | 110 | 8 |

[Table 4]

Table 4: Compositions in Comparative Examples

| Comparative Example No. | Aluminosilicate source (A) | | | | Alkali activator (B) | | Alkali-resistant fibers (C) | | Slag activator (D) | Aggregate (E) | Other powder (F) | | | | | Forming auxiliary (G) | | Content of aluminosilicate source (A) | Content of blast furnace slag | Content of alkali activator (B) | Curing conditions | | Drying conditions | |
|---|---|---|---|---|---|---|---|---|---|---|---|---|---|---|---|---|---|---|---|---|---|---|---|---|
| | Blast furnace slag | Fly ash | Metakaolin | Red mud | Sodium hydroxide | Water glass No. 3 | | | Aluminum sulfate | Sand | Silica fume | Gypsum dihydrate | Sodium gluconate | Aluminum powder | Slaked lime | Pulp | Thickening agent | | | | | | | |
| | % by mass | | | | % by mass | | Type | % by mass | % by mass | % by mass | % by mass | | | | | % by mass | | % by mass | % by mass | % by mass | °C | Hour | °C | Hour |
| 1 | 33.3 | 8.9 | - | - | 10.8 | - | PVA1 | 0.7 | - | 44.4 | 1.8 | - | 0.1 | - | - | - | - | 42.2 | 78.9 | 10.8 | 90 | 24 | 110 | 8 |
| 2 | 16.5 | 29.7 | - | - | 2.7 | - | PVA1 | 0.7 | - | 48.3 | 2.0 | - | 0.1 | - | - | - | - | 46.2 | 35.7 | 2.7 | 90 | 24 | 110 | 8 |
| 3 | 37.1 | 9.8 | - | - | 2.7 | - | - | - | - | 48.3 | 2.0 | - | 0.1 | - | - | - | - | 46.9 | 79.1 | 2.7 | 90 | 24 | - | - |
| 4 | 37.1 | 9.8 | - | - | 2.7 | - | - | - | - | 48.3 | 2.0 | - | 0.1 | - | - | - | - | 46.9 | 79.1 | 2.7 | 90 | 24 | 110 | 4 |
| 5 | 37.1 | 9.8 | - | - | 2.7 | - | - | - | - | 48.3 | 2.0 | - | 0.1 | - | - | - | - | 46.9 | 79.1 | 2.7 | 90 | 24 | 110 | 8 |
| 6 | 36.8 | 9.7 | - | - | 2.7 | - | PVA1 | 0.7 | - | 48.0 | 2.0 | - | 0.1 | - | - | - | - | 46.5 | 79.1 | 2.7 | 90 | 24 | - | - |
| 7 | 36.9 | 9.8 | - | - | 2.7 | - | PP | 0.5 | - | 48.0 | 2.0 | - | 0.1 | - | - | - | - | 46.7 | 79.0 | 2.7 | 90 | 24 | - | - |
| 8 | 36.9 | 9.7 | - | - | 2.7 | - | Nylon | 0.6 | - | 48.0 | 2.0 | - | 0.1 | - | - | - | - | 46.6 | 79.2 | 2.7 | 90 | 24 | - | - |
| 9 | 46.8 | - | - | - | 2.7 | - | PVA1 | 0.7 | - | 47.7 | 2.0 | - | 0.1 | - | - | - | - | 46.8 | 100 | 2.7 | 90 | 24 | - | - |
| 10 | 36.8 | 9.7 | - | - | 2.7 | - | PVA1 | 0.7 | - | 48.0 | 2.0 | - | 0.1 | - | - | - | - | 46.5 | 79.1 | 2.7 | 90 | 24 | 40 | 24 |
| 11 | 36.8 | 9.7 | - | - | 2.7 | - | PVA1 | 0.7 | - | 48.0 | 2.0 | - | 0.1 | - | - | - | - | 46.5 | 79.1 | 2.7 | 90 | 24 | 40 | 72 |

[Table 5]

Table 5: Evaluation results of cured composites of Examples and Comparative Examples

| | Coefficient of variation in average content of fibers | Fiber agglomeration degree | Water content | Bending strength | | Flexural toughness | Dimensional change ratio |
|---|---|---|---|---|---|---|---|
| | | | | LOP | MOR | | |
| | % | % | % by mass | N/mm2 | N/mm2 | N/mm | % |
| Example 1 | 9.0 | 2.8 | 3.5 | 6.5 | 10.1 | 349 | 0.049 |
| Example 2 | 9.6 | 3.3 | 1.9 | 6.7 | 11.1 | 356 | 0.078 |
| Example 3 | 8.8 | 3.1 | 0.9 | 8.0 | 11.5 | 368 | 0.092 |
| Example 4 | 18.2 | 5.8 | 2.1 | 6.9 | 15.1 | 508 | 0.079 |
| Example 5 | 18.5 | 4.6 | 2.0 | 6.8 | 14.5 | 513 | 0.083 |
| Example 6 | 12.0 | 4.3 | 2.0 | 6.7 | 3.9 | 239 | 0.070 |
| Example 7 | 14.3 | 3.7 | 1.9 | 7.0 | 4.7 | 271 | 0.074 |
| Example 8 | 7.7 | 1.8 | 3.5 | 6.5 | 8.9 | 312 | 0.085 |
| Example 9 | 8.5 | 2.3 | 1.0 | 10.8 | 12.6 | 478 | 0.058 |
| Example 10 | 8.9 | 2.6 | 0.7 | 12.3 | 14.6 | 555 | 0.076 |
| Example 11 | 15.1 | 3.6 | 1.9 | 11.1 | 12.8 | 490 | 0.055 |
| Example 12 | 14.6 | 3.3 | 1.0 | 12.5 | 14.8 | 525 | 0.071 |
| Example 13 | 9.3 | 2.1 | 2.3 | 6.8 | 8.4 | 416 | 0.046 |
| Example 14 | 8.9 | 1.9 | 2.1 | 7.0 | 8.6 | 423 | 0.061 |
| Example 15 | 8.3 | 1.8 | 2.3 | 7.6 | 8.8 | 448 | 0.063 |
| Example 16 | 8.1 | 1.8 | 2.4 | 7.2 | 8.6 | 423 | 0.072 |
| Example 17 | 7.6 | 2.2 | 1.4 | 8.6 | 9.3 | 446 | 0.051 |
| Example 18 | 7.8 | 2.3 | 0.3 | 10.0 | 11.1 | 565 | 0.080 |
| Example 19 | 10.0 | 3.8 | 2.0 | 6.7 | 10.8 | 348 | 0.072 |
| Example 20 | 10.3 | 4.0 | 2.6 | 6.5 | 10.4 | 352 | 0.065 |
| Example 21 | 10.6 | 4.1 | 3.3 | 6.1 | 9.6 | 342 | 0.057 |
| Example 22 | 9.5 | 2.9 | 1.3 | 5.8 | 7.0 | 347 | 0.052 |
| Example 23 | 5.1 | 1.0 | 7.1 | 10.7 | 21.7 | 668 | 0.036 |
| Example 24 | 4.6 | 0.8 | 6.8 | 11.5 | 22.4 | 854 | 0.027 |
| Example 25 | 10.5 | 4.2 | 2.4 | 7.5 | 8.0 | 400 | 0.089 |
| Example 26 | 8.8 | 2.6 | 1.8 | 8.3 | 10.3 | 512 | 0.053 |
| Example 27 | 9.1 | 2.9 | 1.7 | 7.4 | 10.1 | 504 | 0.055 |
| Example 28 | 9.0 | 2.8 | 4.2 | 7.0 | 8.2 | 443 | 0.068 |
| Example 29 | 5.1 | 2.7 | 3.1 | 3.1 | 3.7 | 293 | 0.098 |
| Example 30 | 4.8 | 2.8 | 2.1 | 3.4 | 4.1 | 721 | 0.106 |
| Example 31 | 4.9 | 3.2 | 1.9 | 3.5 | 4.5 | 648 | 0.103 |

(continued)

| | Coefficient of variation in average content of fibers | Fiber agglomeration degree | Water content | Bending strength | | Flexural toughness | Dimensional change ratio |
|---|---|---|---|---|---|---|---|
| | | | | LOP | MOR | | |
| | % | % | % by mass | $N/mm^2$ | $N/mm^2$ | N/mm | % |
| Example 32 | 6.9 | 4.2 | 2.4 | 11.2 | 15.7 | 556 | 0.091 |
| Comparative Example 1 | 35.3 | 8.2 | 1.8 | 9.3 | 11.2 | 324 | 0.179 |
| Comparative Example 2 | 37.8 | 18.1 | 2.0 | 4.1 | 6.4 | 230 | 0.130 |
| Comparative Example 3 | - | - | 10.4 | 4.3 | - | 37 | 0.039 |
| Comparative Example 4 | - | - | 3.6 | 6.3 | - | 36 | 0.062 |
| Comparative Example 5 | - | - | 1.9 | 6.3 | - | 40 | 0.090 |
| Comparative Example 6 | 9.2 | 2.9 | 11.6 | 4.3 | 9.7 | 328 | 0.040 |
| Comparative Example 7 | 12.3 | 5.0 | 11.5 | 4.4 | 3.4 | 211 | 0.044 |
| Comparative Example 8 | 13.9 | 4.2 | 11.6 | 4.7 | 4.0 | 229 | 0.033 |
| Comparative Example 9 | 7.9 | 1.8 | 11.9 | 4.0 | 6.3 | 267 | 0.030 |
| Comparative Example 10 | 8.8 | 2.9 | 11.1 | 5.0 | 8.7 | 287 | 0.069 |
| Comparative Example 11 | 9.1 | 3.1 | 10.2 | 5.1 | 9.4 | 331 | 0.074 |

All of the cured composites produced in Examples 1 to 32 had high bending strength, high flexural toughness and high dimensional stability. Each of these cured composites had a smaller coefficient of variation in average content of fibers. This result means that the variation in average content of the fibers in the cured composite is small, and therefore the dimensional stability of the cured composite can be improved more greatly with the decrease in the variation. As demonstrated by the results of Example 4, when the fiber content in the cured composite was increased, the fiber agglomeration degree was increased to a smaller extent. However, because the cured composite had the feature of the present invention, a sufficiently smaller fiber agglomeration degree was achieved and therefore high bending strength (MOR) was achieved in the cured composite.

As demonstrated by the results of Examples 9 to 10, when water glass was used, more superior bending strength and flexural toughness were achieved.

When aluminum sulfate that served as the slag activator (D) was further added, as demonstrated by the results of Example 13, further improved flexural toughness was achieved even though the curing time was short. Furthermore, in the compositions of Examples 14 to 16, further improved LOP was also achieved in addition to further improved flexural toughness.

When water glass and aluminum sulfate were used, as demonstrated by the results of Examples 17 to 18, further improved LOP and flexural toughness were achieved.

When gypsum dihydrate was used as the other powder (F), as demonstrated by the results of Examples 19 to 21, higher dimensional stability was achieved. In addition, it was found from improved formability that cracking was prevented more satisfactorily.

In each of Examples 29 to 32, the formulation was also intended to decrease the weight of the cured composite.

On the other hand, in the cured composite produced in Comparative Example 1 in which the content ratio of sodium hydroxide that served as the alkali activator (B) was larger than 10% by mass relative to a total solid content in the curable composition, the coefficient of variation in average content of fibers was high, and high dimensional change ratio was shown.

In the cured composite produced in Comparative Example 2 in which the content of the blast furnace slag relative to the total solid content in the aluminosilicate source (A) was less than 40% by mass, the coefficient of variation in average content of fibers and the fiber agglomeration degree were high, and lower LOP, lower flexural toughness and higher dimensional change ratio were shown compared with those of the cured composite produced in Example 2 that was a counterpart of Comparative Example 2.

In the cured composite produced in Comparative Example 3 in which reinforcing fibers were not contained and the water content in the cured composite was more than 10.0% by mass relative to a total mass of the cured composite, lower bending strength (MOR) and remarkably poor flexural toughness were shown.

In the cured composites produced in Comparative Examples 4 to 5 in each of which reinforcing fibers were not contained, remarkably poor flexural toughness was shown.

In the cured composites produced in Comparative Examples 6 to 9 in each of which the water content in the cured composite was more than 10.0% by mass relative to a total mass of the cured composite, the bending strength and the flexural toughness were remarkably lower than those of the cured composites produced in Examples that were counterparts of these Comparative Examples (i.e., Examples 1, 6, 7 and 8).

In the cured composites produced in Comparative Examples 10 to 11 in each of which the water content in the cured composite was more than 10.0% by mass relative to a total mass of the cured composite, the bending strength and the flexural toughness were lower and the dimensional change ratio was higher than those of the cured composite produced in the Example that was a counterpart of these Comparative Examples (i.e., Example 1).

INDUSTRIAL APPLICABILITY

The cured composite according to the present invention has high bending strength and high dimensional stability. Therefore, the cured composite according to the present invention can be used usefully as various civil engineering and architectural materials such as, but not particularly limited to, a block, a flooring material, a wall material, a ceiling material, a partition, a roof material and a tiling material.

## Claims

1. A cured composite of a curable composition comprising (A) an aluminosilicate source, (B) an alkali activator and (C) alkali-resistant fibers, in which:

   the aluminosilicate source (A) contains a blast furnace slag, in which the content of the blast furnace slag is 40% by mass or more relative to a total solid content in the aluminosilicate source (A);
   the content of the alkali activator (B) is 10% by mass or less relative to a total solid content in the curable composition; and
   the water content in the cured composite is 10.0% by mass or less relative to a total mass of the cured composite.

2. The cured composite according to claim 1, wherein the content of the aluminosilicate source (A) is 20% by mass or more and 75% by mass or less relative to a total solid content in the curable composition.

3. The cured composite according to claim 1 or 2, wherein the alkali-resistant fibers (C) comprise at least one selected from the group consisting of polyvinyl alcohol-based fibers, polyethylene fibers, polypropylene fibers, acrylic fibers, aramid fibers and nylon fibers.

4. The cured composite according to any one of claims 1 to 3, wherein the content of the alkali-resistant fibers (C) is 0.05% by mass or more and 5% by mass or less relative to a total solid content in the cured composite.

5. The cured composite according to any one of claims 1 to 4, wherein a fiber agglomeration degree of the alkali-resistant fibers (C) is 10% or less.

6. The cured composite according to any one of claims 1 to 5, wherein a coefficient of variation of an average content of the alkali-resistant fibers (C) contained in arbitrary 10 pieces cut out from the whole or part of the composite so that each piece weighs 10 g is 30% or less.

**7.** The cured composite according to any one of claims 1 to 6, wherein the cured composite further contains an aggregate (E), in which the content of the aggregate (E) is 15% by mass or more and 75% by mass or less relative to a total solid content in the cured composite.

**8.** The cured composite according to any one of claims 1 to 7, wherein the aluminosilicate source (A) further contains at least one selected from the group consisting of fly ash, metakaolin and red mud.

**9.** The cured composite according to any one of claims 1 to 8, wherein the cured composite further contains a slag activator (D), in which the content of the slag activator (D) is 0.01% by mass or more and 3% by mass or less relative to a total solid content in the cured composite.

**10.** The cured composite according to any one of claims 1 to 9, wherein the cured composite further contains a calcium sulfate derivative, in which the content of the calcium sulfate derivative is 0.01% by mass or more and 20% by mass or less relative to a total solid content in the cured composite.

**INTERNATIONAL SEARCH REPORT**

International application No.
PCT/JP2021/024324

A. CLASSIFICATION OF SUBJECT MATTER
C04B 12/04(2006.01)i; C04B 16/06(2006.01)i; C04B 22/14(2006.01)i; C04B 28/26(2006.01)i
FI: C04B28/26 ZAB; C04B12/04; C04B16/06 A; C04B22/14 B
According to International Patent Classification (IPC) or to both national classification and IPC

B. FIELDS SEARCHED
Minimum documentation searched (classification system followed by classification symbols)
C04B12/04; C04B16/06; C04B22/14; C04B28/26

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2012-171855 A (HIROTA, Yoshiji) 10 September 2012 (2012-09-10) table 1, paragraph [0033] table 1, paragraph [0033] | 1-9<br>1-10 |
| Y | JP 2013-216534 A (NICHIHA CO., LTD.) 24 October 2013 (2013-10-24) claims | 10 |
| Y | JP 11-147278 A (NIPPON KAYAKU CO., LTD.) 02 June 1999 (1999-06-02) paragraphs [0035], [0036] | 1-10 |
| Y | JP 2018-122585 A (TOSHIBA CORP.) 09 August 2018 (2018-08-09) paragraphs [0037], [0070] | 1-10 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 16 August 2021 (16.08.2021) | 24 August 2021 (24.08.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | <br>Telephone No. |

Form PCT/ISA/210 (second sheet) (January 2015)

**INTERNATIONAL SEARCH REPORT**
Information on patent family members

International application No.
PCT/JP2021/024324

| Patent Documents referred in the Report | Publication Date | Patent Family | Publication Date |
|---|---|---|---|
| JP 2012-171855 A | 10 Sep. 2012 | (Family: none) | |
| JP 2013-216534 A | 24 Oct. 2013 | US 2013/0263760 A1<br>claims<br>EP 2647610 A2<br>KR 10-2013-0113971 A<br>CN 103360014 A | |
| JP 11-147278 A | 02 Jun. 1999 | (Family: none) | |
| JP 2018-122585 A | 09 Aug. 2018 | US 2019/0389770 A1<br>paragraphs [0057], [0091]<br>WO 2018/143205 A1<br>EP 3578533 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2011184221 A
- JP 5097495 A
- JP 2015157731 A